# EUROPÄISCHE PATENTSCHRIFT

(11) **EP 4 400 712 B1**
(45) Veröffentlichungstag und Bekanntmachung des Hinweises auf die Patenterteilung: **18.11.2026**
(21) Anmeldenummer: 24151132.8
(22) Anmeldetag: 10.01.2024
(51) Int. Cl.: F03D 1/06

(54) **INSERT FÜR EIN WINDENERGIEANLAGENROTORBLATT SOWIE WINDENERGIEANLAGENROTORBLATT**
INSERT FOR A WIND TURBINE ROTOR BLADE AND WIND TURBINE ROTOR BLADE
INSERT POUR UNE PALE DE ROTOR D'ÉOLIENNE ET PALE DE ROTOR D'ÉOLIENNE

(30) Priorität: 12.01.2023 DE 102023100608
(43) Veröffentlichungstag der Anmeldung: 17.07.2024
(73) Patentinhaber: Nordex Energy SE & Co. KG, 22419 Hamburg (DE)
(72) Erfinder: ZAROCHENTSEV, Alexander, 22419 Hamburg (DE); LIPKA, Thomas, 22419 Hamburg (DE)
(74) Vertreter: Völkl Siebenson Patentanwälte - Partnerschaft mbB

(56) Entgegenhaltungen:
- EP-A1- 2 138 716
- WO-A2-2012/140039
- US-A1- 2015 361 950
- US-A1- 2021 222 668
- US-A1- 2022 228 554

## Beschreibung

Die Erfindung betrifft ein Insert für ein Windenergieanlagenrotorblatt sowie ein Windenergieanlagenrotorblatt.

Windenergieanlagen mit Windenergieanlagenrotorblättern (im Folgenden auch kurz: Rotorblätter) sind aus dem Stand der Technik vielfach bekannt und werden verwendet, um Windenergie in elektrische Energie umzuwandeln. Ein solches Rotorblatt kann als geteiltes oder segmentiertes Rotorblatt ausgeführt sein, bei welchem Rotorblattsegmente der Länge nach angeordnet und im Bereich einer Teilungsstelle (auch Segmentierungsstelle genannt) zusammengefügt sind. Zum Verbinden der beiden Rotorblattsegmente kommen mechanische Verbindungen zum Einsatz. Beispielsweise werden pro Rotorblattsegment jeweils eine Vielzahl von in das Laminat integrierten Verbindungsmitteln (sogenannte Inserts, beispielsweise Querbolzen oder Lagerhülsen) vorgesehen, mittels derer die Rotorblattsegmente unter Zuhilfenahme weitere Befestigungsmittel (Befestigungsschraubbolzen oder dergleichen) miteinander verbunden werden können. Zum Beispiel befinden sich die Verbindungsmittel im Laminat eines jeweiligen Anschlussendes oder Teilungsflansches der Rotorblattsegmente. Die Rotorblattsegmente können direkt oder über geeignete Zwischenstücke miteinander verbunden werden.

Ein gattungsgemäßer Aufbau ist beispielsweise aus der internationalen Anmeldung WO 2015/124568 A1 bekannt.

Die WO 2012140039A2 offenbart ein Rotorblatt für eine Windturbine. Das Blatt ist eine Schalenstruktur, die aus einem faserverstärkten Verbundwerkstoff besteht und einen Wurzelbereich sowie einen Tragflächenbereich umfasst. Der Wurzelbereich hat einen ringförmigen Querschnitt und umfasst eine Vielzahl von langgestreckten Ringen mit einem Innengewinde, die im faserverstärkten Polymer in Abständen voneinander eingebettet sind, um im Wesentlichen dem Umfang des Wurzelbereichs zu folgen und den Zugang von außen zu den Innengewinden) zu ermöglichen. Die Ringe sind schichtweise angeordnet, um eine faserverstärkte Verbundstruktur mit Metallfasern, vorzugsweise Stahlfasern, zu erhalten .

Die EP 2138716 A1 offenbart einen Blatteinsatz, der in der festen Laminierung im oberen oder unteren mittleren Teil des aerodynamischen Teils eines Blattes gekoppelt ist. Der Einsatz besteht aus einem Kopf, der dazu bestimmt ist, den Einsatz an eine andere Struktur zu schrauben, und einem Körper, der zur Verbindung mit der Laminierung dient und eine zylindrische oder konische Form mit einer inneren konischen Höhlung aufweist. Die Verbindung zwischen Einsatz und Laminierung erfolgt mit einem chemischen Doppelschicht-Klebeverbund, das heißt, sowohl auf der äußeren als auch auf der inneren Oberfläche des Einsatzkörpers.

Geteilte Rotorblätter sind insbesondere aus Transportgründen zu bevorzugen und gewinnen vor allem aufgrund der steigenden Gesamtlänge von Rotorblättern zunehmend an Bedeutung.

Beim Segmentieren von Rotorblättern werden typischerweise die in Faserverbundbauweise ausgeführten Primärstrukturen (Hauptgurte), welche beispielsweise aus hochfesten und hochsteifen Endlosfasern und hochgradig technologisierten und präzisen Halbzeugen (etwa Pultrudaten) bestehen, wieder zusammengefügt. Besonders hohe Kräfte, etwa mehrere 1000 kN in komplexen Lastfällen, müssen hierbei vom Spitzensegment (sogenanntes Tipsegment) über die entsprechenden mechanischen Verbindungen ins Wurzelsegment geleitet werden.

Ähnliches gilt auch für die wurzelseitige mechanische Verbindung von Rotorblättern mit der Rotornabe, wobei im Wurzelbereich Verbindungsmittel vorgesehen sind.

Nachteile bei derartigen Verbindungen, etwa von Rotorblattsegmenten untereinander, sind beispielsweise:
- ein hoher Massezuwachs aufgrund der Verbindungstechnologie,
- die engen Toleranzen, die typischerweise zum Herstellen dieser Art von Rotorblattverbindung benötigt werden,
- die aufwendige, komplexe und kostenintensive Herstellung der Teilungsstelle,
- die hohe Distanz beziehungsweise Entfernung der Primärstruktur (Gurte und Stege) von der Segmentierungsstelle, und
- das geringe Maß an Zugänglichkeit zu den Verbindungen und damit einhergehend eine geringe Reparaturfreundlichkeit.

Eine Aufgabe, die der Erfindung zugrunde liegt, ist es, ein Konzept für ein Rotorblatt anzugeben, welches die oben genannten Nachteile reduziert oder sogar vermeidet.

Gemäß einem ersten Aspekt wird ein Insert für ein Windenergieanlagenrotorblatt offenbart. Das Insert erstreckt sich entlang einer Längsachse von einem ersten Insertende bis zu einem zweiten Insertende. Das Insert weist am ersten Insertende einen Aufnahmekörper zum Aufnehmen eines Verbindungsbolzens und einen an den Aufnahmekörper anschließenden und daran festgelegten, länglichen Einbettungskörper auf. Der Aufnahmekörper bildet einen ersten Längsabschnitt und der Einbettungskörper bildet einen zweiten Längsabschnitt entlang der Längsachse. Der längliche Einbettungskörper weist einen Blechabschnitt auf oder ist als Blechabschnitt ausgebildet.

Kern der beschriebenen Lösung ist, dass das Insert einen zum Aufnahmekörper separaten Einbettungskörper aufweist, der einen länglichen Blechabschnitt aufweist oder als dieser ausgebildet ist. Die Einbettung des Inserts in die Rotorblattstruktur wird über den an dem Aufnahmekörper befestigten beziehungsweise festgelegten Einbettungskörper realisiert. Der Aufnahmekörper für den Verbindungsbolzen, das heißt der Lagerbock, welcher geometrisch nur über komplexe und masseintensive Laminataufbauten in die Rotorblatthalbschale einzubetten wäre, ist selbst gar nicht in den Laminataufbau integriert. Mit anderen Worten findet keine Einbettung des Aufnahmekörpers statt. Die Erfindung ermöglicht damit ein Insert, bei welchem der Aufnahmekörper, der eine gewisse räumliche Ausdehnung aufgrund der Aufnahme des Verbindungsbolzens hat, keine oder nur vernachlässigbare Interaktionen mit der Faserverbundstruktur des Rotorblatts aufweist.

Das Insert ermöglicht unter anderem einen Kraftfluss von einem Verbindungsbolzen in den Aufnahmekörper und weiter in den faserverbundgerecht ausgeführten Einbettungskörper. Die Geometrie des Blechabschnittes ist bevorzugt korrespondierend zur Geometrie des Rotorblatts im Anschlussbereich (etwa des Rotorblattsegments oder der Rotorblattwurzel) nur sanft geschwungen, weitgehend geradlinig und dünnwandig. Das Fasermaterial für das Rotorblatt muss so nicht um große Krümmungen, wie sie der Aufnahmekörper aufweist, herumgeführt werden, sondern kann seinem natürlichen Verlauf im Wesentlichen folgen und auf eine weite und hauptsächlich sanfte Kontur verlegt werden. Aufgrund der sehr großen Fläche, die der Blechabschnitt für die Einbettung ins Laminat bereitstellt, entsteht eine sehr große, strukturmechanisch optimale und fertigungsgerechte Klebefläche, was zu einer sehr guten Anhaftung im Laminat führt und den Fertigungsprozess vielseitig vereinfacht, da geometrisch besonders viel Komplexität reduziert wird. Das Insert stellt ausgezeichnete Leichtbaueigenschaften aufgrund des Blechabschnitts bereit und ermöglicht damit eine faserverbundgerechte Leichtbaukonstruktion. Beispielsweise kann sämtlicher Bauraum sinnvoll mit Material ausgenutzt werden, denn es wird statt eines großen runden Inserts (circa 50 bis 80 mm) nur ein vergleichsweise flaches und dünnwandiges Element einlaminiert.

Die Erfinder haben festgestellt, dass das erfindungsgemäße Insert eine Reihe von Vorteilen bietet und insbesondere die eingangs genannten Nachteile reduziert oder ganz vermeidet, vor allem gegenüber einer herkömmlichen Einbettung von runden, vornehmlich metallischen Hülsen im Laminat des Windenergieanlagenrotorblatts.
- Es wird zu einem vergleichsweise geringem Massezuwachs in einem Rotorblattsegment beigetragen, wobei ein Haupttreiber nur noch das Verbindungselement selbst und nicht mehr der Laminataufbau ist, welcher zur Einbettung benötigt wird.
- Es werden geringe Toleranzanforderungen ermöglicht, da der Aufnahmekörper je nach Bedarf mit verschiedenen Möglichkeiten für eine Bolzenlagerung ausgeführt werden kann (s**.** unten).
- Es wird zu einer vergleichsweise einfachen, fertigungsgerechten und kostensparenden Herstellung einer Teilungsstelle beigetragen, da der Laminataufbau im Bereich des Einbettungskörpers beziehungsweise des Blechabschnitts immer flächig seinem natürlichen Profil folgend verlegt werden kann.
- Es wird ermöglicht, eine sehr geringe Distanz der Primärstruktur (Gurte und Stege) zur der Teilungsstelle herzustellen. Dies liegt daran, dass geometrische Komplexitäten beim Einbetten reduziert oder vermieden werden, so dass beispielsweise ein Hauptgurt bis direkt an die Segmentierungsstelle gelegt werden kann. Dies ermöglicht große strukturmechanische Vorteile.
- Weiterhin wird ein hohes Maß an Zugänglichkeit ermöglicht, da im Wesentlichen der gesamte Aufnahmekörper für die Bolzenaufnahme frei liegen kann.
- Auch ermöglicht das Insert eine besonders hohe Reparaturfreundlichkeit, da im Wesentlichen der gesamte Aufnahmekörper für die Bolzenaufnahme frei liegen kann und somit eventuelle Schäden im Laminat bei der Fertigung mit einfachen Laminataufbauten ausgebessert werden können.

Der Aufnahmekörper ist beispielsweise im Wesentlichen zylindrisch ausgebildet. Der Aufnahmekörper kann auch als Lagerbock bezeichnet werden. Alternativ kann der Aufnahmekörper im Querschnitt auch quadratisch ausgebildet sein.

Gemäß zumindest einer Ausführungsform nimmt eine Wandstärke des als Blechabschnitt ausgebildeten Einbettungskörpers zu einem dem Aufnahmekörper abgewandten Ende hin ab, d.h**.** der Blechabschnitt ist keilförmig ausgebildet. Beispielsweise weist die Wandstärke des Blechabschnitts an einem dem Aufnahmekörper zugewandten Ende 10 bis 20 mm auf (bezogen auf eine Längsachse des Inserts) und nimmt über eine vorbestimmte Länge auf null ab. Die vorbestimmte Länge beträgt beispielsweise 500 mm bis 1500 mm, bevorzugt 1000 mm. Dies ermöglicht die eingangs genannten Vorteile und Funktionen, insbesondere die optimale Einbettung des Inserts in den Laminataufbau, wobei Gurte und/oder Stege im Inneren des Rotorblatts bis fast an die Segmentierungsstelle herangeführt werden können.

Gemäß zumindest einer Ausführungsform ist der Blechabschnitt geschäftet und die Wandstärke nimmt - bezüglich der Längsachse des Inserts - in einem Schäftungsverhältnis von 1:20 bis 1:100 ab, insbesondere von 100 % auf nahezu null. Dies trägt zu den obigen Vorteilen und Funktionen bei.

Gemäß zumindest einer Ausführungsform ist der Blechabschnitt korrespondierend zu einer äußeren Oberfläche des Windenergieanlagenrotorblatts gekrümmt in einer Richtung quer zu einer Längsachse des Windenergieanlagenrotorblatts. Das heißt in einem bestimmungsgemäßen Einbauzustand des Inserts ist der Blechabschnitt leicht gebogen, etwa sanft geschwungen. Dies trägt zu den obigen Vorteilen und Funktionen bei.

Gemäß zumindest einer Ausführungsform erstreckt sich der Blechabschnitt außermittig, insbesondere von einer Außenseite, von dem Aufnahmekörper weg. Dadurch kann der Einbettungskörper in das Laminat des Rotorblatts integriert werden ohne den freien Zugang zum Aufnahmekörper einzuschränken. Dies trägt zu den obigen Vorteilen und Funktionen bei.

Gemäß zumindest einer Ausführungsform ist der Aufnahmekörper als eine Durchgangsbohrung ausgebildet. Mit anderen Worten weist der Aufnahmekörper kein (Innen-)Gewinde auf. Dies ist eine besonders kostengünstige Variante. Weiterhin sind damit vergleichsweise geringe Toleranzanforderungen verbunden, denn es kann ein Verbindungsbolzen mit großem Spiel durch die Durchgangsbohrung geführt sein. D.h. der Verbindungsbolzen hat in der Durchgangsbohrung ein großes Spiel zur Wandung, was insbesondere bei einem geteilten Rotorblatt besonders vorteilhaft ist, denn der Verbindungsbolzen könnte entsprechend der Position des Fügepartners am gegenüberliegenden Rotorblattsegment mit viel Toleranz ausgerichtet werden.

Gemäß zumindest einer Ausführungsform ist der Aufnahmekörper als eine Durchgangsbohrung mit Innengewinde ausgebildet. Das Innengewinde stellt ein sogenanntes Festgewinde dar. Dies ermöglicht eine insofern besonders einfache Montage, dass keine weiteren Bauteile vorgehalten werden müssen.

Gemäß zumindest einer Ausführungsform hat der Einbettungskörper eine oder mehrere in Längsrichtung des Inserts verlaufende Rippen. Zusätzlich oder alternativ ist der Aufnahmekörper von der einen oder mehreren Rippen umgeben. Optional können sich die eine oder mehreren Rippen zumindest teilweise über beide, den Einbettungskörper und den Aufnahmekörper, erstrecken. Dadurch wird die Tragfähigkeit des Inserts, das heißt etwa die Steifigkeit und Belastbarkeit, um ein Vielfaches, beispielsweise Faktor drei, erhöht, im Vergleich zu einer Ausführungsform ohne Rippen.

Gemäß zumindest einer Ausführungsform weist der Einbettungskörper an einem dem Aufnahmekörper zugewandten Ende eine Vertiefung oder Mulde auf. Bevorzugt ist der Aufnahmekörper in der Vertiefung oder Mulde angeordnet. Die Vertiefung/Mulde erstreckt sich in Längsrichtung des Inserts. Die Vertiefung/Mulde ist beispielsweise länger als der Aufnahmekörper bezogen auf die Längsachse des Inserts. Beispielsweise ist der Aufnahmekörper an einem dem Aufnahmekörper zugewandten Ende der Vertiefung angeordnet. Beispielsweise ist die Vertiefung/Mulde umgeben von, begrenzt von oder definiert durch zumindest zwei der oben genannten Rippen.

Dadurch wird mehr Bauraum für den Verbindungsbolzen und etwaige zugehörige Bauteile wie Muttern und Scheiben, geschaffen. Dies erleichtert die Montage. Weiterhin kann der Aufnahmekörper dadurch besonders weit an die Unterseite des Einbettungskörpers wandern, das heißt in Richtung Außenseite des Rotorblatts, im bestimmungsgemäßen Einbauzustand des Inserts. Dies bewirkt beispielsweise mehr statische Höhe beim Verbau im Rotorblattprofil. Dadurch wird zu einer besonders hohen geometrischen Steifigkeit des Inserts mit verbundenem Verbindungsbolzen im Rotorblattprofil beigetragen, da der Aufnahmekörper besonders weit außen im Rotorblattprofil wirken kann.

Gemäß einem zweiten Aspekt wird ein Windenergieanlagenrotorblatt offenbart, welches ein Anschlussende zur Verbindung mit einer Rotornabe aufweist oder ein Rotorblattsegment mit einem Anschlussende zur Verbindung mit einem weiteren Rotorblattsegment aufweist, wobei das Anschlussende an der Saugseite und/oder der Druckseite folgenden Aufbau ausgehend von einer Außenseite in Richtung der Innenseite des Windenergieanlagenrotorblatts beziehungsweise des Rotorblattsegments aufweist:
- eine Außenlaminatlage,
- Inserts, welche jeweils gemäß einer der zuvor beschriebenen Ausführungsformen des ersten Aspekts ausgebildet sind und welche nebeneinander auf der Außenlaminatlage angeordnet sind, und
- eine innere Laminatlage (Innenlaminatlage), die die Aufnahmekörper nicht bedeckt.

Das Windenergieanlagenrotorblatt ermöglicht im Wesentlichen die vorgenannten Vorteile und Funktionen. Die zuvor beschriebenen Ausführungsformen und Weiterbildungen sind analog auf das Windenergieanlagenrotorblatt anwendbar. Umgekehrt gelten nachfolgende Ausführungen, soweit zutreffend, auch für das Insert gemäß dem ersten Aspekt.

Das Windenergieanlagenrotorblatt gemäß dem zweiten Aspekt sieht zwei mögliche Anwendungsorte für die erfindungsgemäßen Inserts vor. So kann das erfindungsgemäße Insert entweder an der Rotorblattwurzel oder an einem Anschlussende eines Rotorblattsegmentes (im Falle eines geteilten Rotorblatts) oder einer Kombination von beidem angeordnet sein. Im Falle eines geteilten Rotorblatts können auch die Anschlussenden beider Rotorblattsegmente mit den Inserts versehen sein, wobei die Inserts an beiden Anschlussenden gleichartig oder auch unterschiedlich ausgebildet sein können. Der oben beschriebene Aufbau des Windenergieanlagenrotorblatts, gleich ob an der Rotorblattwurzel oder am Anschlussende eines Rotorblattsegments, kann ergänzt sein um eines oder mehreren der folgenden Merkmale: Füllstücke, Kernmaterial, Pultrudate etc.

Der Aufnahmekörper der Inserts ist an der Innenseite frei von einem Laminataufbau. Insbesondere sind die Aufnahmekörper nicht mit Laminat überdeckt. Innenseitige Laminatlagen können bis kurz vor beziehungsweise an die Aufnahmekörper geführt werden. Dies ermöglicht die bereits genannten Vorteile und Funktionen, insbesondere mit Hinblick auf die Zugänglichkeit und eine optimale Einbettung in das Laminat.

Gemäß zumindest einer Ausführungsform ist in Richtung der Innenseite nach der inneren Laminatlage eine Primärstruktur anordnet. Beispielsweise ist die Primärstruktur auf der inneren Laminatlage angeordnet. Die Primärstrukur kann wie beim ersten Aspekt beschrieben besonders nah an das Anschlussende, etwa die Teilungsstelle herangeführt sein.

Gemäß zumindest einer Ausführungsform ist der Blechabschnitt der Inserts korrespondierend zu einer äußeren Oberfläche des Windenergieanlagenrotorblatts gekrümmt in einer Richtung quer zur Längsachse des Windenergieanlagenrotorblatts. Dies ermöglicht die bereits genannten Vorteile und Funktionen.

Gemäß zumindest einer Ausführungsform ist der Aufnahmekörper der Inserts so ausgebildet, dass er an einer Innenseite des Windenergieanlagenrotorblatts an beiden Seiten frei zugänglich ist. Dadurch wird die Montage, aber auch etwaige Wartungs- oder Reparaturarbeiten erleichtert. Beispielsweise im Falle von Aufnahmekörpern mit Durchgangsbohrungen ist dies von Vorteil, damit die Verbindungsbolzen mit Muttern etc. verschraubt werden können.

Gemäß zumindest einer Ausführungsform ist das Windenergieanlagenrotorblatt durch ein erstes Rotorblattsegment und ein zweites Rotorblattsegment gebildet.

Jedes Rotorblattsegment weist ein Anschlussende auf. Jedes Rotorblattsegment hat an seinem Anschlussende mehrere Inserts gemäß einer Ausführungsform des ersten Aspekts, die in Längsrichtung des Windenergieanlagenrotorblatts angeordnet sind. Korrespondierende Inserts der beiden Anschlussenden sind miteinander mechanisch fest verbunden zum Verbinden der beiden Rotorblattsegmente. Die beiden Anschlussenden können mittelbar oder unmittelbar über die Inserts verbunden sein. Beispielsweise können die Inserts über ein oder mehrere Zwischenstücke wie Flanschbauteile, verbunden sein. Die Inserts beider Anschlussenden können gleichartig angeordnet und/oder ausgebildet sein. Ebenso können die Inserts pro Anschlussende unterschiedlich ausgebildet sein.

Gemäß zumindest einer Ausführungsform weisen die Aufnahmekörper sämtlicher Inserts des einen Rotorblattsegments eine Durchgangsbohrung ohne Innengewinde auf, und die Aufnahmekörper sämtlicher Inserts des anderen Rotorblattsegments weisen eine Durchgangsbohrung mit einem Innengewinde auf.

Dadurch können auf der einen Seite die Verbindungsbolzen direkt in das Insert eingeschraubt werden, während auf der anderen Seite die Verbindungsbolzen über Muttern befestigt werden. Dies ermöglicht eine erleichterte Montage, wobei vergleichsweise geringe Toleranzanforderungen vorherrschen. Die Verbindungsbolzen können leicht in die Durchgangsbohrungen (ohne Festgewinde) eingefädelt werden und, da die Aufnahmekörper frei von Laminat sind, über Muttern befestigt werden.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen.

In den Figuren zeigen:
Figur 1 eine schematische Darstellung einer Windenergieanlage,
Figur 2 eine schematische Darstellung eines geteilten Rotorblatts mit zwei Rotorblattsegmenten,
Figur 3 eine schematische Schnittdarstellung einer Bolzenverbindung zweier Rotorblattsegmente eines Rotorblatts,
Figur 4 zeigt ein Insert gemäß einem Ausführungsbeispiel der Erfindung,
Figuren 5 und 6 zeigen Inserts gemäß Figur 4 in einer Einbausituation gemäß einem Ausführungsbeispiel der Erfindung,
Figuren 7 bis 10 zeigen ein Insert gemäß einem weiteren Ausführungsbeispiel der Erfindung, und
Figuren 11 bis 16 eine schematische Verbindung zweier Rotorblattsegmente gemäß einem Ausführungsbeispiel der Erfindung.

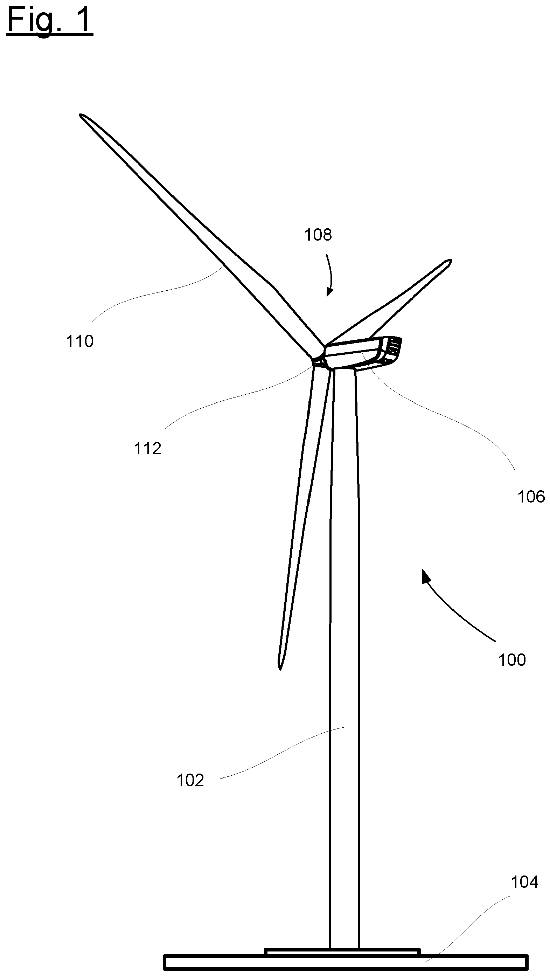

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen-)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

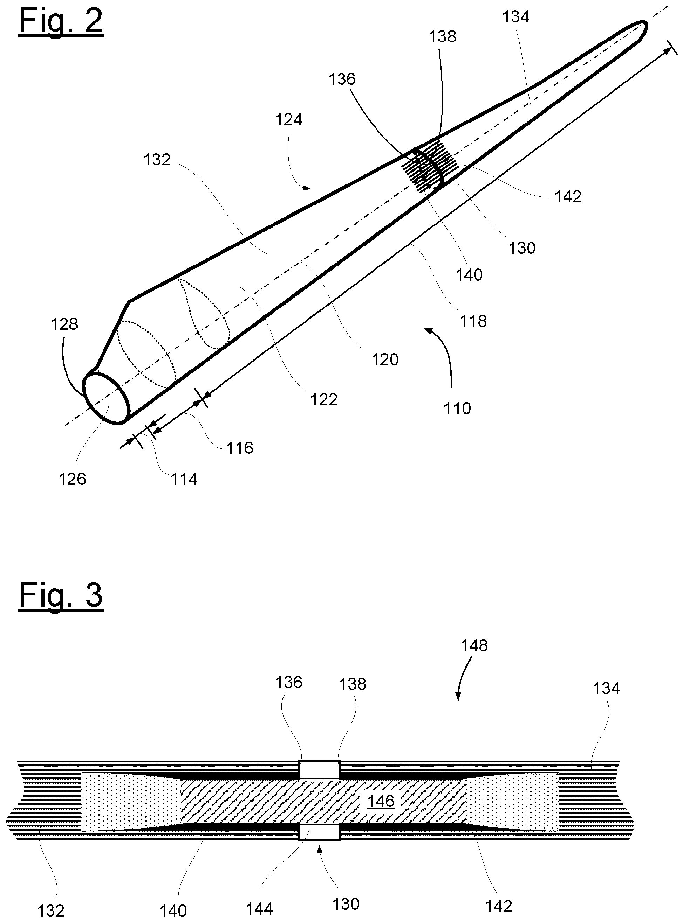

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 (auch Haupterstreckungsrichtung oder Längsachse) eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 miteinander verbunden sind. Hierzu weisen beide Segmente 132, 134 jeweils ein Anschlussende 136, 138 (auch Segmentverbindungsbereiche) auf. Das Rotorblatt 110 ist somit ein geteiltes Rotorblatt wie eingangs beschrieben. Jedes Anschlussende 136, 138 weist eine Vielzahl von Inserts 140, 142, beispielsweise Lagerhülsen, auf, die dem Profil in Umfangsrichtung folgend angeordnet sind und für die Aufnahme von Schraubbolzen, auch Lagerbolzen oder Verbindungsbolzen genannt, ausgebildet sind. Beispielsweise weisen die ersten Inserts 140 erste Innengewinde und die zweiten Inserts 142 zweite Innengewinde oder umgekehrt auf. Alternativ können die einen Inserts lediglich Durchgangsbohrungen und die anderen Inserts Gewinde aufweisen. Ein Anschlussende 136, 138 ist beispielsweise als ein Flanscheinleger realisiert, welcher als Einlegeteil in eine Fertigungsform zur Herstellung des Rotorblattes 110 eingelegt wird. Es ist jedoch auch denkbar, dass kein Flanscheinleger vorgesehen ist und die Inserts direkt in die Rotorblatthalbschalen eingebettet und einlaminiert werden.

Im Folgenden wird die Verbindung beider Rotorblattsegmente 132, 134 gemäß einer herkömmlichen, aus dem Stand der Technik bekannten Lösung genauer beschrieben, wobei dies exemplarisch anhand einer einzelnen Bolzenverbindung erläutert wird.

Figur 3 zeigt eine schematische Schnittansicht in einem Teilbereich zweier verbundener Rotorblattsegmente 132, 134 an der Teilungsstelle 130, wobei eine einzelne Bolzenverbindung 148 dargestellt ist. Das erste Anschlussende 136 des ersten Rotorblattsegments 132 weist die Vielzahl von in das Laminat eingebetteten ersten Inserts 140 und das zweite Anschlussende 138 des zweiten Rotorblattsegments 134 weist die Vielzahl von in das Laminat eingebetteten zweiten Inserts 142 auf. In jeweils ein Paar zueinander fluchtend angeordneter erster und zweiter Inserts 140, 142 ist ein Verbindungsbolzen 146 eingeschraubt, der die beiden Anschlussenden 136, 138 und somit die beiden Rotorblattsegmente 132, 134 mechanisch fest verbindet. Zusätzlich ist zwischen den beiden Anschlussenden 136, 138 pro Bolzenverbindung 148 ein Druckstück 144 angeordnet.

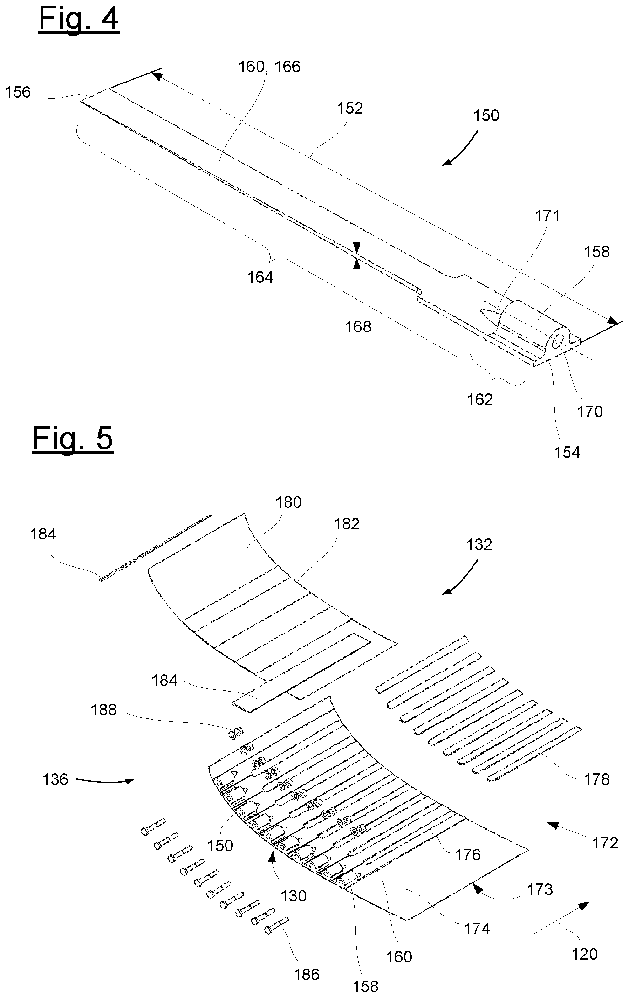

Im Folgenden wird anhand der Figuren 4 bis 6 ein Insert 150 gemäß einem Ausführungsbeispiel der Erfindung beschrieben. Sofern nicht anders angegeben gelten die zuvor beschriebenen Merkmale und deren zugehörige Bezugszeichen analog.

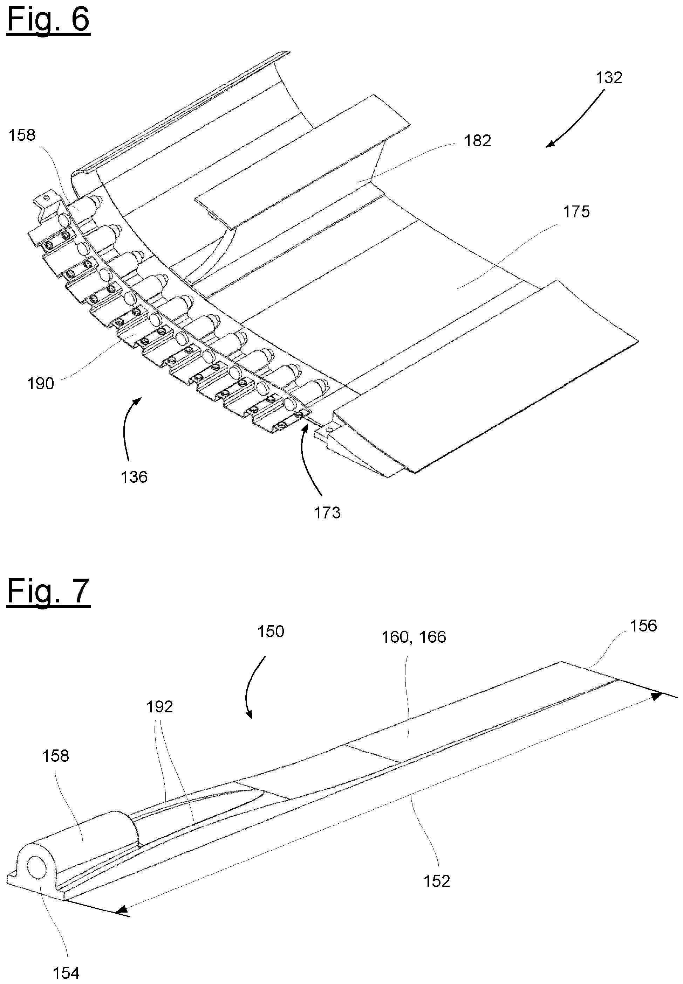

Figur 4 zeigt perspektivisch das Insert 150, während Figur 5 eine schematische Explosionsdarstellung eines Anschlussendes 132 des Rotorblattes 110 und Figur 6 das Anschlussende 132 schematisch in einem Einbauzustand zeigen.

Das Insert 150 ist länglich ausgebildet, erstreckt sich entlang einer Längsachse 152 und hat eine Gesamtlänge von beispielsweise 1000 mm (im Ausführungsbeispiel). Das Insert 150 erstreckt sich von einem ersten Insertende 154 bis zu einem zweiten Insertende 156. Am ersten Insertende 154 umfasst das Insert 150 einen Aufnahmekörper 158. An diesen schließt sich ein länglicher Einbettungskörper 160 an. Der Aufnahmekörper 158 bildet einen ersten Längsabschnitt 162 und der Einbettungskörper bildet einen zweiten Längsabschnitt 164 entlang der Längsachse 152. Der zweite Längsabschnitt 164 ist deutlich länger als der erste Längsabschnitt 162, beispielsweise in einem Verhältnis 5 zu 1.

Der Einbettungskörper 160 ist als ein Blechabschnitt 166 ausgebildet. Mit anderen Worten handelt es sich bei dem Einbettungskörper 160 um einen länglichen Blechabschnitt. Der Einbettungskörper 160 ist ausgebildet um im Laminataufbau des Rotorblattes 110 beziehungsweise eines Rotorblattsegments 132, 134 eingebettet zu sein, das heißt vollständig von Laminat umgeben zu sein. Der Aufnahmekörper 158 ist ausgebildet um einen Verbindungsbolzen 146 aufzunehmen.

Der Blechabschnitt 166 ist derart ausgebildet, dass eine Wandstärke 168 in Richtung des zweiten Insertendes 156 hin auf null abnimmt. Der Blechabschnitt 166 ist - anders ausgedrückt - geschäftet, wobei die Wandstärke 168 in einem Schäftungsverhältnis von 1:20 bis 1:100 abnimmt. Der Aufnahmekörper 158 hat eine Durchgangsbohrung 170 ohne ein Innengewinde. Der Blechabschnitt 166 ist außermittig bezogen auf die Durchgangsbohrung 170 und deren Bohrungsachse 171 angeordnet. Mit anderen Worten erstreckt sich der Blechabschnitt 166 außermittig von dem Aufnahmekörper 158 weg, insbesondere von einer Außenseite des Aufnahmekörpers 158.

Figur 5 zeigt eine Explosionsdarstellung eines Aufbaus 172 des Anschlussendes 136 des Rotorblattsegments 132. Von einer Außenseite 173 des Rotorblatts 110 ausgehend ist eine Außenlaminatlage 174 vorgesehen, auf der mehrere der Inserts 150 angeordnet sind. Die Außenlaminatlage 174 bildet die Außenschale des Rotorblatts 110, etwa einer Halbschale, und weist eine entsprechende Kontur beziehungsweise Profil auf.

Die Inserts 150 sind nebeneinander angeordnet. Die Blechabschnitte 166 beziehungsweise Einbettungskörper 160 können so geformt sein, dass zwischen zwei unmittelbar benachbarten Blechabschnitten 166 ein Zwischenraum 176 gebildet ist. Beispielsweise können die Blechabschnitte 166 entlang der Längsachse 120 zumindest teilweise schmaler sein als eine Maximalbreite eines Inserts 150. In die Zwischenräume können Füllstücke 178, beispielsweise Kernmaterial oder Pultrudate, eingesetzt sein. Auf die Inserts 150 ist eine innere Laminatlage 180 aufgebracht, die sich von der Nasenkante bis zur Endkante des Rotorblattes erstreckt. Auf der inneren Laminatlage 180 ist eine Primärstruktur 182 angeordnet. Die Primärstruktur 182 ist beispielsweise ein Hauptgurt. Zusätzlich kann Kernmaterial 184 einseitig oder beidseitig des Gurtes vorgesehen sein. Für die Verbindung mit dem weiteren Rotorblattsegment 134 werden beispielsweise Längsbolzen 186 und zugehöriges Zubehör 188 wie Muttern und Scheiben verwendet.

Figur 6 zeigt das fertige Anschlussende 136, wobei als ein wesentlicher Punkt zu erkennen ist, dass die innere Laminatlage 180 und vor allem die Primärstruktur 182 fast unmittelbar an die Teilungsstelle 130 herangeführt werden können, insbesondere bis an die Aufnahmekörper 158 heran. Die Aufnahmekörper 158 selbst sind nicht von Laminat und Primärstrukturen bedeckt und liegen an der Innenseite 175 des Rotorblatts 110 bzw. Rotorblattsegments 132 frei. Damit sind sie besonders gut für die Verschraubung zugänglich.

Die Inserts 150 und der beschriebene Aufbau 172 ermöglichen die eingangs genannten Vorteile und Funktionen. Wesentlich ist, dass es sich um einen besonders einfachen und faserverbundgerechten Aufbau handelt. Die Inserts 150 lassen sich nicht zuletzt aufgrund des länglichen, flachen Einbettungskörpers 160 einfach in den Aufbau 172 integrieren. Der Aufbau 172 erlaubt auch eine besonders einfache Ausrüstung mit der Primärstruktur 182. An dieser Stelle sei erwähnt, dass der Blechabschnitt 166 und damit der Einbettungskörper 160 der Inserts 150 leicht gekrümmt sind, korrespondierend zu der Außenseite 173 (auch äußere Oberfläche) des Rotorblatts 110. Auch dies trägt zu der besonders guten und vor allem faserverbundgerechten Einbettung der Inserts 150 bei. Die außermittige Anordnung des Blechabschnitts 166 und damit des Einbettungskörpers 160 ermöglicht, dass dieser besonders nah an der Außenseite 173 des Rotorblatts 110 angeordnet werden kann.

Es sei erwähnt, dass in Figur 6 die Verschraubung der Inserts 150 mit einem Flanschelement 190 gezeigt ist. Selbstverständlich erlauben die Inserts 150 jedoch auch die direkte Verschraubung mit anderen Inserts des zweiten Rotorblattsegments 134. Auch können die Inserts 150 sowie der Aufbau 172 im Rotorblattwurzelbereich 114 und dessen Rotorblattanschlussende 126 zusätzlich oder alternativ zum Einsatz kommen.

Anstelle der Durchgangsbohrungen 170 ohne Innengewinde und einer Verschraubung der Längsbolzen 186 mittels Muttern und dergleichen, können die Durchgangsbohrungen 170 auch mit Festgewinden, das heißt Innengewinden, versehen sein, so dass ein direktes Verschrauben mit den Inserts 170 möglich ist.

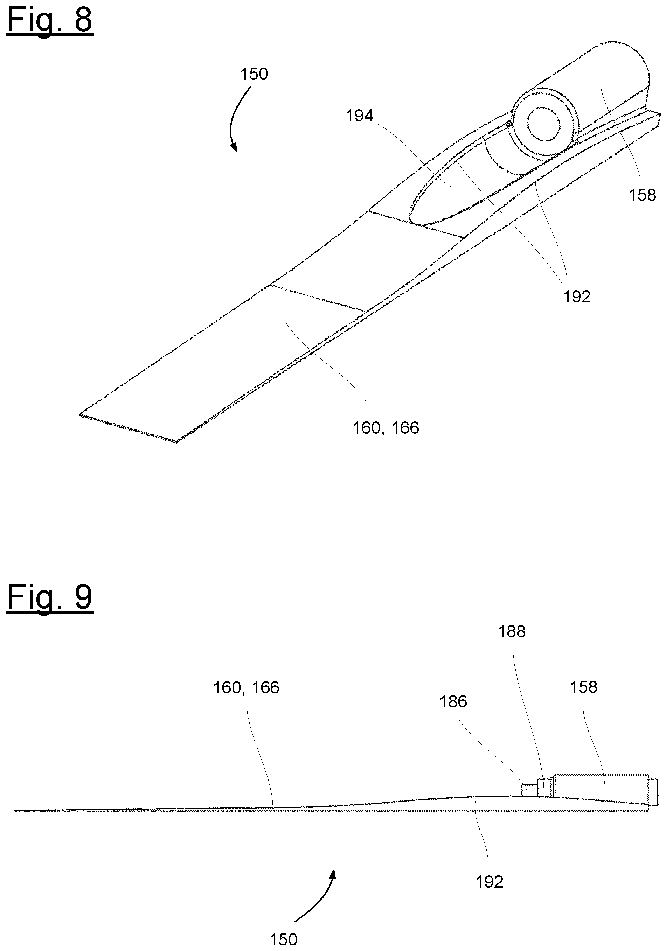

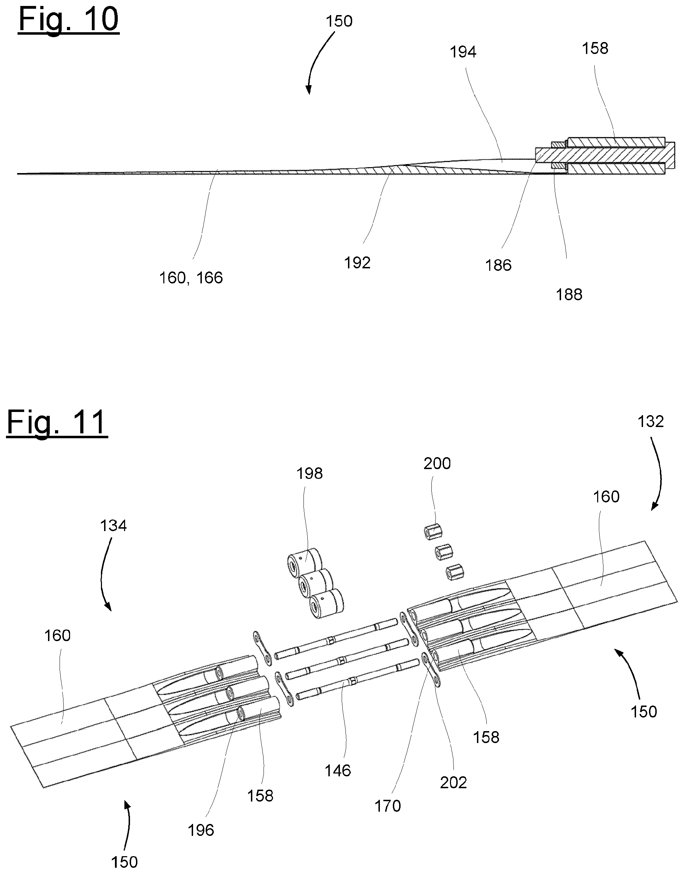

Figuren 7 bis 9 zeigen ein Insert 150 gemäß einem weiteren Ausführungsbeispiel der Erfindung. Im Wesentlichen gilt das oben Gesagte analog. Im Unterschied zu den Inserts 150 gemäß den Figuren 4 bis 6 weist dieses Insert 150 zwei Rippen 192 auf, die sich entlang der Längsrichtung 152 über den Aufnahmekörper 158 und einen Teil des Einbettungskörpers 160 erstrecken. Die Rippen 192 bilden eine Mulde 194 zwischen sich aus, wobei der Aufnahmekörper 158 zwischen den Rippen 192 angeordnet und in der Mulde 194 eingebettet ist. Dadurch ergeben sich die eingangs genannten Vorteile und Funktionen. Insbesondere die Mulde 194 ermöglicht Bauraum und damit eine besonders gute Zugänglichkeit für die Verschraubung und Anbringung von Befestigungsmitteln, etwa dem Bolzen 186 und das Zubehör 188 (siehe Figur 10).

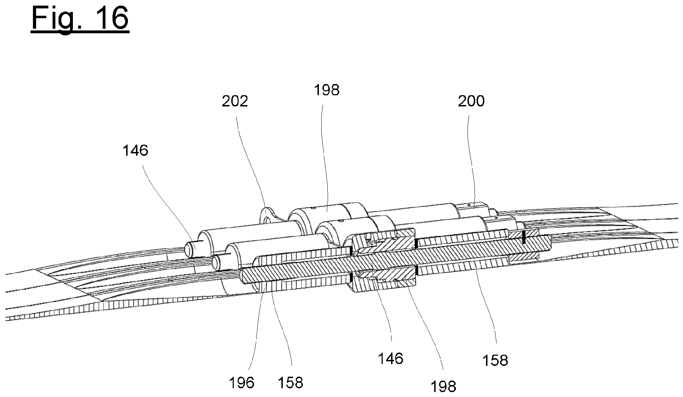

Im Folgenden wird anhand von Figuren 11 bis 16 eine beispielhafte Verbindung zweiter Rotorblattsegmente 132, 134 beschrieben. Dabei werden einzelne Verbindungsschritte beschrieben.

Die Figuren zeigen eine schematische Explosionsansicht mit beteiligten Komponenten zum Verbinden zweier Rotorblattsegmente 132, 134. Aus Gründen der Übersichtlichkeit sind lediglich Komponenten für drei Bolzenpaarungen gezeigt. Auf die Darstellungen der Rotorblatthülle ist verzichtet.

In Figur 11 werden zum Verbinden Inserts 150 gemäß der Figuren 4 bis 6 verwendet, wobei die Inserts 150 des ersten Rotorblattsegments 132 Durchgangsbohrungen 170 ohne Innengewinde und die Inserts 150 des zweiten Rotorblattsegments 134 Festgewinde 196 aufweisen.

Die beiden Rotorblattsegmente 132, 134 werden über Verbindungsbolzen 146 direkt verbunden, das heißt es werden im gezeigten Ausführungsbeispiel keine Flanschelemente 190 (s. Figur 6) verwendet. Weiterhin kommen Hydraulikmuttern 198, Muttern 200 mit Sicherungen sowie Klemmbleche 202 zum Einsatz. Es sei darauf hingewiesen, dass von einer detaillierten Beschreibung der Hydraulikmuttern 198, der Muttern 200 und der Klemmbleche 202 im Kontext dieser Offenbarung abgesehen wird, da diese Komponenten in anderen Verbindungsarten nicht zwingend vorhanden sein müssen. Der Fokus ist auf die Inserts 150 sowie die Verschraubung über die Bolzen 146 gerichtet.

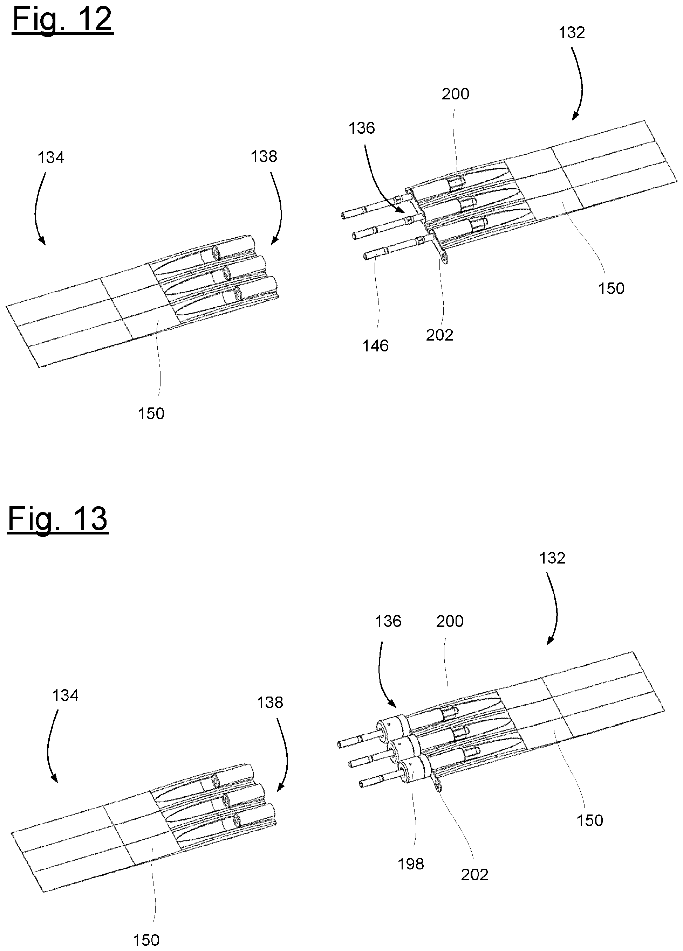

Zunächst werden mit Blick auf Figur 12 die Verbindungsbolzen 146 in die Aufnahmekörper 158 der Inserts 150 eingefädelt. Aufgrund der Durchgangsbohrungen 170 ohne Innengewinde können hier im Vergleich zu den anderen Varianten von Inserts relativ große Toleranzen ausgeglichen werden, da ein entsprechender Verbindungsbolzen 146 in der Durchgangsbohrung 170 relativ frei beweglich ist. Es gilt: Je größer die Durchgangsbohrung 170 und je dünner der Verbindungsbolzen 146, umso größer der Toleranzausgleich.

Nach dem Einfädeln werden die Verbindungsbolzen 146 im Blattinneren mit den Muttern 200 (vorzugsweise rund) gesichert, wobei Scheiben zum Einsatz kommen können. Damit ein weiteres Verdrehen einer Mutter 200 auf dem entsprechenden Bolzengewinde verhindert wird, werden die Muttern 200 auf dem jeweiligen Bolzengewinde gesichert, beispielsweise durch Splinte, Klebsicherungen oder Fadensicherungen. Die Scheiben können als Messcheiben ausgeführt werden, so dass nach einem Vorspannen der Bolzenverbindungen entsprechende Vorspannkräfte über ein Signal abgelesen werden können, um das Montageergebnis und die Betriebsschraubenkraft zu bewerten.

Nach diesem ersten Montageabschnitt sind die Bolzen in den Aufnahmekörpern 158 entlang ihrer Längsachsen verschiebbar. Dieser erste Montageabschnitt könnte falls gewünscht bereits im Werk erfolgen und das erste Rotorblattsegment 132 könnte dann schon mit montierten Verbindungsbolzen 146 ausgeliefert werden.

Anschließend oder bereits beim zuvor beschriebenen Einfädeln werden Klemmbleche 202 auf die Stirnflächen der Aufnahmekörper 158 aufgesetzt, etwa um diese elektrisch leitend zu verbinden und blitzschutztechnischen Anforderungen gerecht zu werden.

Es folgt das Auffädeln der Hydraulikmuttern 198 auf jeden Verbindungsbolzen 146 (s. Figur 13).

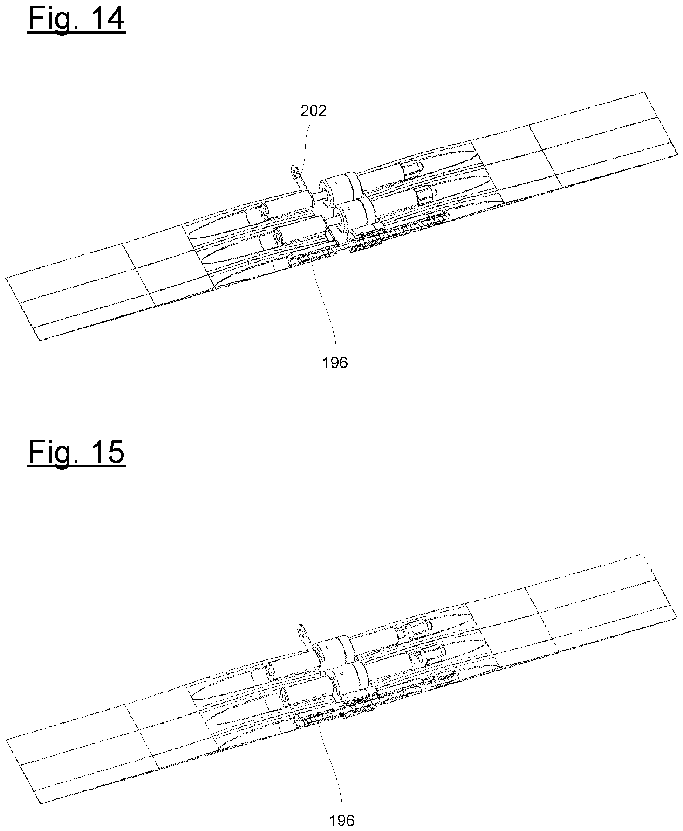

Anschließend werden die beiden Rotorblattsegmente 132, 134 aneinander herangeführt, wobei das zweite Rotorblattsegment 134 ebenfalls mit Klemmblechen 202 ausgerüstet wird, um auch dort die Verbindungsbolzen 146 elektrisch leitend miteinander zu verbinden. Sämtliche Verbindungsbolzen 146 werden in die entsprechenden Aufnahmekörper 158 der Inserts 150 des zweiten Rotorblattsegments 134 eingefädelt (s. Figur 14).

Wie erwähnt haben die Aufnahmekörper 158 der Inserts 150 des zweiten Rotorblattsegments 134 Festgewinde 196. Beim folgenden feinen Zusammenschieben der beiden Rotorblattsegmente 132, 134 auf Stoß, also soweit, dass beide Rotorblattsegmente 132, 134 mit Ihren Anschlussenden 136, 138 (und Klemmblechen 202) an die Hydraulikmuttern 198 stoßen, schieben sich Verbindungsbolzen 146 entlang Längsachsen in das erste Rotorblattsegment 132 hinein, da die Festgewinde 196 in den Aufnahmekörpern 158 der Inserts 150 des zweiten Rotorblattsegments 134 das weitere Einschieben der Verbindungsbolzen 146 verhindert (Figur 15).

Über das Drehen der Hydraulikmuttern 198 und einen Formschluss dieser mit den Verbindungsbolzen 146 (beispielsweise Sechskant) können nun alle Verbindungsbolzen 146 festgezogen werden, bis die Hydraulikmuttern 198 im ersten Rotorblattsegment 132 an den Aufnahmekörpern 158 innen anliegen und optional die Verbindungsbolzen(-gewinde) im zweiten Rotorblattsegment 134 über die Aufnahmekörper 158 überstehen.

Anschließend werden Hydraulikleitungen an alle Hydraulikmuttern 198 angeschlossen und ein entsprechender Druck aufgebracht, der zu einem Längen der Verbindungsbolzen 146 und somit einer Vorspannung der gesamten Verbindungen führt.

Das beschriebene Verfahren zur Verbindung der Segmente ist nur beispielhaft und könnte auch anders ausgeführt sein.

Entscheidend ist, dass im beschriebenen Beispiel die eingangs beschriebenen Inserts 150 zum Einsatz kommen, wobei diese auf der einen Seite mit Festgewinde und auf der anderen Seite ohne Festgewinde ausgeführt sind.

### Bezugszeichenliste

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschlussende
- 128: Flanschanschluss
- 130: Teilungsstelle
- 132: erstes Rotorblattsegment
- 134: zweites Rotorblattsegment
- 136: erstes Anschlussende
- 138: zweites Anschlussende
- 140: erstes Insert
- 142: zweites Insert
- 144: Druckstück
- 146: Verbindungsbolzen
- 148: Bolzenverbindung
- 150: Insert
- 152: Längsachse
- 154: erstes Insertende
- 156: zweites Insertende
- 158: Aufnahmekörper
- 160: Einbettungskörper
- 162: erster Längsabschnitt
- 164: zweiter Längsabschnitt
- 166: Blechabschnitt
- 168: Wandstärke
- 170: Durchgangsbohrung
- 171: Bohrungsachse
- 172: Aufbau
- 173: Außenseite
- 174: Außenlaminatlage
- 175: Innenseite
- 176: Zwischenraum
- 178: Füllstück
- 180: innere Laminatlage
- 182: Primärstruktur
- 184: Kernmaterial
- 186: Längsbolzen
- 188: Zubehör
- 190: Flanschelement
- 192: Rippe
- 194: Mulde
- 196: Festgewinde
- 198: Hydraulikmutter
- 200: Mutter
- 202: Klemmblech

## Patentansprüche

1. Insert (150) für ein Windenergieanlagenrotorblatt (110), wobei
sich das Insert (150) entlang einer Längsachse (152) von einem ersten Insertende (154) bis zu einem zweiten Insertende (156) erstreckt,
das Insert (150) am ersten Insertende (154) einen Aufnahmekörper (158) zum Aufnehmen eines Verbindungsbolzens (146) und einen an den Aufnahmekörper (158) anschließenden und daran festgelegten, länglichen Einbettungskörper (160) umfasst,
der Aufnahmekörper (158) einen ersten Längsabschnitt (162) und der Einbettungskörper (160) einen zweiten Längsabschnitt (164) entlang der Längsachse (152) bilden, und
der längliche Einbettungskörper (160) einen Blechabschnitt (166) aufweist oder als Blechabschnitt (166) ausgebildet ist.

2. Insert (150) nach Anspruch 1, wobei eine Wandstärke (168) des Blechabschnitts (166) zu einem dem Aufnahmekörper (158) abgewandten Ende (156) hin abnimmt.

3. Insert (150) nach Anspruch 2, wobei der Blechabschnitt (166) geschäftet ist und die Wandstärke (168) in einem Schäftungsverhältnis von 1:20 bis 1:100 abnimmt.

4. Insert (150) nach einem der vorhergehenden Ansprüche, wobei der Blechabschnitt (166) korrespondierend zu einer äußeren Oberfläche (173) des Windenergieanlagenrotorblatts (110) gekrümmt ist in einer Richtung quer zu einer Längsachse (120) des Windenergieanlagenrotorblatts (110).

5. Insert (150) nach einem der vorhergehenden Ansprüche, wobei sich der Blechabschnitt (166) außermittig, insbesondere von einer Außenseite, von dem Aufnahmekörper (158) weg erstreckt.

6. Insert (150) nach einem der vorhergehenden Ansprüche, wobei der Aufnahmekörper (158) als eine Durchgangsbohrung (170) ausgebildet ist.

7. Insert (150) nach einem der vorhergehenden Ansprüche, wobei der Aufnahmekörper (158) als eine Durchgangsbohrung (170) mit Innengewinde (196) ausgebildet ist.

8. Insert (150) nach einem der vorhergehenden Ansprüche, wobei der Einbettungskörper (160) eine oder mehrere in Längsrichtung (152) des Inserts (150) verlaufende Rippen (192) aufweist.

9. Insert (150) nach einem der vorhergehenden Ansprüche, wobei der Einbettungskörper (160) an einem dem Aufnahmekörper (158) zugewandten Ende eine Vertiefung oder Mulde (194) aufweist.

10. Insert (150) nach Anspruch 9, wobei der Aufnahmekörper (158) in der Vertiefung oder Mulde (194) angeordnet ist.

11. Windenergieanlagenrotorblatt (110), welches ein Anschlussende (126) zur Verbindung mit einer Rotornabe (112) aufweist oder ein Rotorblattsegment (132, 134) mit einem Anschlussende (136, 138) zur Verbindung mit einem weiteren Rotorblattsegment (132, 134) aufweist, wobei das Anschlussende (126, 136, 138) an der Saugseite (124) und/oder der Druckseite (122) folgenden Aufbau (172) ausgehend von einer Außenseite (173) in Richtung der Innenseite (175) des Windenergieanlagenrotorblatts (110) beziehungsweise des Rotorblattsegments (132, 134) aufweist:
- eine Außenlaminatlage (174),
- Inserts (150), welche gemäß einem der vorhergehenden Ansprüche ausgebildet sind und welche nebeneinander auf der Außenlaminatlage (174) angeordnet sind, und
- eine innere Laminatlage (180), die die Aufnahmekörper (158) nicht bedeckt.

12. Windenergieanlagenrotorblatt (110) nach Anspruch 11, wobei in Richtung der Innenseite (175) nach der inneren Laminatlage (180) eine Primärstruktur (182) angeordnet ist.

13. Windenergieanlagenrotorblatt (110) nach Anspruch 11 oder 12, wobei der Blechabschnitt (166) korrespondierend zu einer äußeren Oberfläche (173) des Windenergieanlagenrotorblatts (110) gekrümmt ist in einer Richtung quer zur Längsachse (120) des Windenergieanlagenrotorblatts (110).

14. Windenergieanlagenrotorblatt (110) nach einem der Ansprüche 11 bis 13, wobei der Aufnahmekörper (158) ausgebildet ist an einer Innenseite (175) des Windenergieanlagenrotorblatts (110) an beiden Seiten frei zugänglich zu sein.

15. Windenergieanlagenrotorblatt (110) nach einem der Ansprüche 11 bis 14, welches durch ein erstes Rotorblattsegment (132) und ein zweites Rotorblattsegment (134) gebildet ist, wobei
- jedes Rotorblattsegment (132, 134) ein Anschlussende (136, 138) aufweist,
- jedes Rotorblattsegment (132, 134) an seinem Anschlussende (136, 138) mehrere Inserts (150) gemäß einem der Ansprüche 1 bis 10 aufweist, die in Längsrichtung (120) des Windenergieanlagenrotorblatts (110) angeordnet sind, und
- die Inserts (150) der beiden Anschlussenden (136, 138) miteinander mechanisch fest verbunden sind zum Verbinden der beiden Rotorblattsegmente (132, 134).

16. Windenergieanlagenrotorblatt (110) nach einem der Ansprüche 11 bis 15, wobei die Aufnahmekörper (158) sämtlicher Inserts (150) des einen Rotorblattsegments (132, 134) eine Durchgangsbohrung (170) ohne Innengewinde aufweisen, und die Aufnahmekörper (158) sämtlicher Inserts (150) des anderen Rotorblattsegments (132, 134) eine Durchgangsbohrung (170) mit einem Innengewinde (196) aufweisen.

## Claims

1. Insert (150) for a wind turbine rotor blade (110), wherein
the insert (150) extends along a longitudinal axis (152) from a first insert end (154) to a second insert end (156),
the insert (150) comprises, at the first insert end (154), a receiving body (158) for receiving a connecting bolt (146) and an elongate embedding body (160) adjoining the receiving body (158) and fixed thereto,
the receiving body (158) forms a first longitudinal section (162) and the embedding body (160) forms a second longitudinal section (164) along the longitudinal axis (152), and
the elongate embedding body (160) comprises a sheet metal section (166) or is formed as a sheet metal section (166).

2. Insert (150) according to claim 1, wherein a wall thickness (168) of the sheet metal section (166) decreases towards an end (156) facing away from the receiving body (158).

3. Insert (150) according to claim 2, wherein the sheet metal section (166) is scarfed and the wall thickness (168) decreases in a scarf ratio of 1:20 to 1:100.

4. Insert (150) according to any one of the preceding claims, wherein the sheet metal section (166) is curved corresponding to an outer surface (173) of the wind turbine rotor blade (110) in a direction transverse to a longitudinal axis (120) of the wind turbine rotor blade (110).

5. Insert (150) according to any one of the preceding claims, wherein the sheet metal section (166) extends off-centre, in particular from an outer side, away from the receiving body (158).

6. Insert (150) according to any one of the preceding claims, wherein the receiving body (158) is formed as a through-bore (170).

7. Insert (150) according to any one of the preceding claims, wherein the receiving body (158) is formed as a through-bore (170) with internal thread (196).

8. Insert (150) according to any one of the preceding claims, wherein the embedding body (160) comprises one or more ribs (192) extending in the longitudinal direction (152) of the insert (150).

9. Insert (150) according to any one of the preceding claims, wherein the embedding body (160) comprises, at an end facing the receiving body (158), a recess or trough (194).

10. Insert (150) according to claim 9, wherein the receiving body (158) is arranged in the recess or trough (194).

11. Wind turbine rotor blade (110) which comprises a connection end (126) for connection to a rotor hub (112) or comprises a rotor blade segment (132, 134) having a connection end (136, 138) for connection to a further rotor blade segment (132, 134), wherein the connection end (126, 136, 138), at the suction side (124) and/or the pressure side (122), comprises the following structure (172) starting from an outer side (173) in the direction of the inner side (175) of the wind turbine rotor blade (110) or, respectively, of the rotor blade segment (132, 134):
- an outer laminate layer (174),
- inserts (150) which are formed according to any one of the preceding claims and which are arranged next to one another on the outer laminate layer (174), and
- an inner laminate layer (180) which does not cover the receiving bodies (158).

12. Wind turbine rotor blade (110) according to claim 11, wherein, in the direction of the inner side (175), a primary structure (182) is arranged after the inner laminate layer (180).

13. Wind turbine rotor blade (110) according to claim 11 or 12, wherein the sheet metal section (166) is curved corresponding to an outer surface (173) of the wind turbine rotor blade (110) in a direction transverse to the longitudinal axis (120) of the wind turbine rotor blade (110).

14. Wind turbine rotor blade (110) according to any one of claims 11 to 13, wherein the receiving body (158) is configured to be freely accessible on both sides at an inner side (175) of the wind turbine rotor blade (110).

15. Wind turbine rotor blade (110) according to any one of claims 11 to 14, which is formed by a first rotor blade segment (132) and a second rotor blade segment (134), wherein
- each rotor blade segment (132, 134) comprises a connection end (136, 138),
- each rotor blade segment (132, 134) comprises, at its connection end (136, 138), a plurality of inserts (150) according to any one of claims 1 to 10, which are arranged in the longitudinal direction (120) of the wind turbine rotor blade (110), and
- the inserts (150) of the two connection ends (136, 138) are mechanically fixedly connected to one another for connecting the two rotor blade segments (132, 134).

16. Wind turbine rotor blade (110) according to any one of claims 11 to 15, wherein the receiving bodies (158) of all inserts (150) of the one rotor blade segment (132, 134) comprise a through-bore (170) without internal thread, and the receiving bodies (158) of all inserts (150) of the other rotor blade segment (132, 134) comprise a through-bore (170) with an internal thread (196).

## Revendications

1. Insert (150) pour une pale de rotor d'éolienne (110), dans lequel
l'insert (150) s'étend le long d'un axe longitudinal (152) depuis une première extrémité d'insert (154) jusqu'à une deuxième extrémité d'insert (156),
l'insert (150) comprend, à la première extrémité d'insert (154), un corps de réception (158) destiné à recevoir un boulon de liaison (146) et un corps d'encastrement (160) allongé adjacent au corps de réception (158) et fixé à celui-ci,
le corps de réception (158) forme une première section longitudinale (162) et le corps d'encastrement (160) forme une deuxième section longitudinale (164) le long de l'axe longitudinal (152), et
le corps d'encastrement (160) allongé comprend une section de tôle (166) ou est réalisé sous la forme d'une section de tôle (166).

2. Insert (150) selon la revendication 1, dans lequel une épaisseur de paroi (168) de la section de tôle (166) diminue en direction d'une extrémité (156) opposée au corps de réception (158).

3. Insert (150) selon la revendication 2, dans lequel la section de tôle (166) est biseautée et l'épaisseur de paroi (168) diminue selon un rapport de biseautage de 1:20 à 1:100.

4. Insert (150) selon l'une des revendications précédentes, dans lequel la section de tôle (166) est incurvée de manière correspondante à une surface extérieure (173) de la pale de rotor d'éolienne (110) dans une direction transversale à un axe longitudinal (120) de la pale de rotor d'éolienne (110).

5. Insert (150) selon l'une des revendications précédentes, dans lequel la section de tôle (166) s'étend de manière excentrée, en particulier depuis un côté extérieur, en s'éloignant du corps de réception (158).

6. Insert (150) selon l'une des revendications précédentes, dans lequel le corps de réception (158) est réalisé sous la forme d'un alésage traversant (170).

7. Insert (150) selon l'une des revendications précédentes, dans lequel le corps de réception (158) est réalisé sous la forme d'un alésage traversant (170) avec filetage intérieur (196).

8. Insert (150) selon l'une des revendications précédentes, dans lequel le corps d'encastrement (160) comprend une ou plusieurs nervures (192) s'étendant dans la direction longitudinale (152) de l'insert (150).

9. Insert (150) selon l'une des revendications précédentes, dans lequel le corps d'encastrement (160) comprend, à une extrémité tournée vers le corps de réception (158), un renfoncement ou une cuvette (194).

10. Insert (150) selon la revendication 9, dans lequel le corps de réception (158) est agencé dans le renfoncement ou la cuvette (194).

11. Pale de rotor d'éolienne (110), qui comprend une extrémité de raccordement (126) destinée au raccordement à un moyeu de rotor (112) ou comprend un segment de pale de rotor (132, 134) ayant une extrémité de raccordement (136, 138) destinée au raccordement à un segment de pale de rotor (132, 134) supplémentaire, dans laquelle l'extrémité de raccordement (126, 136, 138) comprend, au niveau du côté d'aspiration (124) et/ou du côté de pression (122), la structure (172) suivante en partant d'un côté extérieur (173) en direction du côté intérieur (175) de la pale de rotor d'éolienne (110) ou, respectivement, du segment de pale de rotor (132, 134) :
- une couche de stratifié extérieure (174),
- des inserts (150), qui sont réalisés selon l'une des revendications précédentes et qui sont agencés les uns à côté des autres sur la couche de stratifié extérieure (174), et
- une couche de stratifié intérieure (180), qui ne recouvre pas les corps de réception (158).

12. Pale de rotor d'éolienne (110) selon la revendication 11, dans laquelle, en direction du côté intérieur (175), une structure primaire (182) est agencée après la couche de stratifié intérieure (180).

13. Pale de rotor d'éolienne (110) selon la revendication 11 ou 12, dans laquelle la section de tôle (166) est incurvée de manière correspondante à une surface extérieure (173) de la pale de rotor d'éolienne (110) dans une direction transversale à l'axe longitudinal (120) de la pale de rotor d'éolienne (110).

14. Pale de rotor d'éolienne (110) selon l'une des revendications 11 à 13, dans laquelle le corps de réception (158) est conçu pour être librement accessible des deux côtés au niveau d'un côté intérieur (175) de la pale de rotor d'éolienne (110).

15. Pale de rotor d'éolienne (110) selon l'une des revendications 11 à 14, qui est formée par un premier segment de pale de rotor (132) et un deuxième segment de pale de rotor (134), dans laquelle
- chaque segment de pale de rotor (132, 134) comprend une extrémité de raccordement (136, 138),
- chaque segment de pale de rotor (132, 134) comprend, à son extrémité de raccordement (136, 138), plusieurs inserts (150) selon l'une des revendications 1 à 10, qui sont agencés dans la direction longitudinale (120) de la pale de rotor d'éolienne (110), et
- les inserts (150) des deux extrémités de raccordement (136, 138) sont reliés mécaniquement de manière fixe les uns aux autres pour relier les deux segments de pale de rotor (132, 134).

16. Pale de rotor d'éolienne (110) selon l'une des revendications 11 à 15, dans laquelle les corps de réception (158) de tous les inserts (150) de l'un des segments de pale de rotor (132, 134) comprennent un alésage traversant (170) sans filetage intérieur, et les corps de réception (158) de tous les inserts (150) de l'autre segment de pale de rotor (132, 134) comprennent un alésage traversant (170) avec un filetage intérieur (196).
